# EUROPÄISCHE PATENTSCHRIFT

(11) **EP 3 622 601 B1**
(45) Veröffentlichungstag und Bekanntmachung des Hinweises auf die Patenterteilung: **04.11.2026**
(21) Anmeldenummer: 18770005.9
(22) Anmeldetag: 14.09.2018
(51) Int. Cl.: H02H 7/085

(54) **ANORDNUNG ZUR ÜBERWACHUNG DER WICKLUNGSGRENZTEMPERATUR**
ASSEMBLY FOR MONITORING A WINDING THRESHOLD TEMPERATURE
AGENCEMENT DE SURVEILLANCE DE LA TEMPÉRATURE LIMITE D'ENROULEMENTS

(30) Priorität: 27.10.2017 DE 102017125312
(43) Veröffentlichungstag der Anmeldung: 18.03.2020
(73) Patentinhaber: EBM-Papst Mulfingen GmbH&CO. KG, 74673 Mulfingen (DE)
(72) Erfinder: FUTTERLIEB, Gerd, 74423 Obersontheim (DE); RÖSSLER, Jens, 74673 Mulfingen (DE); PILS, Malte, 74523 Ilshofen-Oberaspach (DE); KLEINHEINZ, Oliver, 74575 Schrozberg (DE)
(74) Vertreter: Staeger & Sperling Partnerschaftsgesellschaft mbB
(86) Internationale Anmeldenummer: PCT/EP2018/074899
(87) Internationale Veröffentlichungsnummer: WO 2019/081123

(56) Entgegenhaltungen:
- US-A- 3 916 257
- US-A- 4 525 763
- US-A1- 2015 188 481

## Beschreibung

Die Erfindung betrifft ein Verfahren zum drehzahlunabhängigen Schutz der Wicklung eines elektrischen Antriebes, insbesondere eines Gleichstrommotors für Ventilatoren vor thermischer Überlastung sowie eine Anordnung zur Überwachung der Wicklungsgrenztemperatur eines solchen elektrischen Antriebs.

In elektrischen Antrieben und Motoren ist es nahezu unvermeidlich, dass im Motor Wärmeverluste auftreten, die zu einer Temperaturerhöhung führen. Für den Elektromotor gibt es demzufolge eine obere Grenztemperatur, und sobald diese überschritten wird, kann der Motor beschädigt werden oder aus fallen z. B. aufgrund eines Isolationsversagens der Wicklung. Die obere Grenztemperatur ist dabei unter anderem von der Isolierstoffklasse der Wicklung abhängig. Die Isolierstoffklassen und höchstzulässige dauerhafte Grenztemperaturen bestimmen sich unter anderem nach der DIN 0530 Teil 1, wobei die maximale Grenztemperatur gemäß DIN EN 61558 für die unterschiedlichen Isolierstoffklassen festgelegt sind.

Es kann infolge von Betriebsstörungen an einer Antriebseinheit oder auch am Elektromotor selbst, zu einer unzulässig hohen Temperatur im Elektromotor kommen. Solche Fälle treten bei vorgesehenen hohen Belastungen der Maschine auf, wie bei Schwergängigkeiten oder z. B. bei Blockade der Mechanik. Auch verschmutzte Belüftungsgitter am Elektromotor können unerwünschte Temperaturerhöhungen nach sich ziehen. Überschreitet die Wicklung des Motors die zulässige Temperatur, nimmt der Elektromotor Schaden, was den Ausfall der gesamten Maschine nach sich ziehen kann. Zum Schutz des Elektromotors vor Überhitzung ist deshalb die Ermittlung der Wicklungstemperatur erforderlich.

Darüber hinaus ist man bei der Auslegung des Motors gezwungen, einen Kompromiss zwischen Baugröße und Lastmoment einzugehen. Insbesondere dann, wenn der Motor praktisch dauerhaft unterhalb seines Nennmomentes betrieben wird und nur kurzzeitige Lastspitzen oberhalb auftreten, ist es wirtschaftlich sinnvoll, den Motor nicht auf die Lastspitzen, sondern auf den zu erwartenden Mittelwert zuzüglich Sicherheitsreserve auszulegen. Um eine unnötige Überdimensionierung zu vermeiden, ist es auch aus diesem Grund erforderlich, die Motortemperatur zu ermitteln oder jedenfalls die obere Grenztemperatur zu überwachen. So werden derzeit Lösungen im Stand der Technik vorgesehen, welche z. B. die Messung der Wicklungstemperatur vorsehen und eine Abschaltvorrichtung aufweisen, die bei Überschreiten der Grenztemperatur auslöst. Eine andere bekannte Herangehensweise sieht vor, dass der Wicklungsstrom in Abhängigkeit der Motordrehzahl begrenzt wird. Die Temperaturerhöhung von Wicklungen bei Motoren wird durch den Motoraufbau deren Wicklungsimpedanz und den Wicklungsstrom bestimmt. Bei einem bekannten Typen-Motor mit bekannter Wicklungsimpedanz kann die Temperaturerhöhung der Wicklung in Abhängigkeit des Wicklungsstromes bei einer Typprüfung bestimmt werden. Diese ermittelten Stromwerte können dann im Betrieb zum Schutz der Motorwicklung vor thermischer Überlast verwendet werden.

Aus der Offenlegungsschrift WO 93/23904 A1 ist z. B. ein Verfahren zur Überwachung eines Elektromotors im Hinblick auf eine thermische Überlastung bekannt, bei dem es darum geht, den technischen Aufwand und das Bauvolumen des notwendigen Überlastungsschutzes des Elektromotors kleinzuhalten. Dazu wird während der Einschaltdauer des Elektromotors dessen Verlustleistung oder eine hierzu proportionale Größe anhand gemessener Motordaten berechnet und anschließend integriert. Der Integrationswert wird mit einem vorgegebenen Schwellwert verglichen, übersteigt der Integrationswert einen Schwellwertgrenzwert, wird der Elektromotor abgeschaltet. Nach diesem bekannten Verfahren bleiben Umgebungseinflüsse, die für das Temperaturverhalten des Elektromotors mitverantwortlich sind, unberücksichtigt. Ein wichtiger Einflussfaktor stellt die Umgebungstemperatur dar, so dass es eine Aufgabe der vorliegenden Erfindung ist, eine Lösung vorzusehen, welche die Umgebungstemperatur berücksichtigt.

Bei anderen bekannten Verfahren, die versuchen ohne einen Temperaturfühler auszukommen, wird der vom Elektromotor gezogene Strom überwacht. Überschreitet der Motorstrom über einen längeren Zeitraum hinweg den zulässigen Dauerstrom, erfolgt die Abschaltung des Motors über Motorschutzschalter oder bei drehzahlregelbaren Drehstrommotoren über den Frequenzumrichter.

Weitere bekannte Verfahren zum Schutz eines Elektromotors gegen Überhitzung sehen eine Temperaturmessung mittels eines Temperatursensors vor, der vornehmlich in die Motorwicklung eingebaut wird. So werden bei bekannten Ausführungsformen von Motoren mit umpressten Statoren z. B. Thermoschalter vor dem Umpressvorgang in die Wicklung eingesetzt und die Anschlusslitzen mit einer Leiterplatte verbunden. Erreicht die auf diese Weise ermittelte Temperatur im Nahbereich der Motorwicklung einen vorgegebenen, höchstzulässigen Grenzwert, wird auch hierbei die Abschaltung des Elektromotors veranlasst. Ein derartiges Verfahren ist aus der Offenlegungsschrift DE 199 39 997 A1 bekannt. US4525763 A offenbart ein weiteres relevantes Verfahren und System aus dem Stand der Technik.

Die aus dem Stand der Technik bekannten Vorrichtungen und Verfahren haben eine Reihe von Nachteilen, aus denen sich in der Praxis Probleme ergeben. Bei Verwendung eines Temperatursensors ist zur elektrischen Isolierung zwischen diesem und der Wicklung eine ausreichende Isolierschicht erforderlich. Diese Isolierschicht stellt zugleich eine thermische Isolierung dar, weswegen sich insbesondere bei Überlast mit hohen Strömen eine Temperaturdifferenz zwischen dem elektrisch aktiven Teil der Wicklung selbst und dem Temperatursensor ergibt. Eine verzögerte Abschaltung des Elektromotors bei bereits vorliegender Überhitzung der Motorwicklung ist die Folge. Dieser Effekt wird durch erhöhte Anforderungen an die elektrische Isolierung für den Personenschutz noch verstärkt. Über einen in die Wicklung eingebauten Temperatursensor wird überdies die Temperatur nur an einer einzigen Stelle der Wicklung erfasst.

Es ist daher Aufgabe der vorliegenden Erfindung, vorbesagte Nachteile zu überwinden und eine Anordnung sowie ein Verfahren zum drehzahlunabhängigen Schutz eines Elektromotors bereitzustellen, die kostengünstig realisierbar ist und auch die Lastausnutzung des Motors verbessert sowie eine unzulässige Temperaturen der Wicklungen des Elektromotors zuverlässig erfasst, um eine rechtzeitige Reduktion der Motorlast oder eine Motorabschaltung bei bzw. vor einer thermischen Überlastung vornehmen zu können.

Diese Aufgabe wird durch eine Temperaturüberwachungsanordnung gemäß Anspruch 1 sowie durch ein Verfahren zur drehzahlunabhängigen Temperaturüberwachungsanordnung gemäß Anspruch 5 gelöst. Grundgedanke der Erfindung ist es die Umgebungstemperatur Tu des Motors, den Motorstrom und den Phasenwinkel des Motorstromes zu erfassen. Dazu wird erfindungsgemäß der Wicklungsstrom über eine Messeinrichtung erfasst und in der Steuereinheit der Motorelektronik mittels Clark-Park Transformation in das d/q-Koordinatensystem (Zeigermodel) transformiert. Dies hat erfindungsgemäß den Vorteil, dass der für den Betrieb der Temperaturüberwachungsanordnung zu erfassende Wicklungsstrom dann als Gleichgröße vorliegt. Hierzu werden über einen vorbestimmten Zeitraum tₘₑₛₛ aus dem Zeigermodell die geometrische Summen aus dem d-wicklungsstrom *Id* und dem q-Wicklungsstrom *Iq* als Grenzwert ${I}_{W} = \sqrt{{Id}^{2} + {Iq}^{2}}$ bestimmt, bei dem die Wicklungtemperaturerhöhung unterhalb eines zulässigen Wertes T_{G} der für den zu schützenden Motor auf Grund seines Aufbaus festgelegten Isolierstoffklasse liegt. Zusätzlich wird bei der Motor-Typprüfung eine maximale Übertemperatur Tₘₐₓ ermittelt, bis zu der die Wicklung mit reduziertem Wicklungsstrom betrieben werden darf. Diese Werte werden in einem nichtflüchtigen Speicher der Motorsteuerung hinterlegt. Im Betrieb des Motors wird dann ein spezifischer Korrekturfaktor K_{TU} für den zulässigen maximalen Wicklungsstrom bei Überschreitung der zulässigen Umgebungstemperatur ermittelt.

In einer bevorzugten Ausgestaltung der Erfindung erfolgt die Bestimmung des Korrekturfaktors K_{TU} wie folgt: ${K}_{TU} = 1 für {T}_{U} < {T}_{Z}$ ${K}_{TU} = 1 - \left(\frac{Tu - Tmax}{Tmax}\right) für {T}_{U} > {T}_{Z}$ wobei
- T_{U} :: Umgebungstemperatur
- T_{Z}:: maximale Umgebungstemperatur, die für den Motor spezifiziert ist (kann z. B. bei der Typprüfung des Motors bestimmt werden)
- Tₘₐₓ:: maximal zulässige Übertemperatur (kann z. B. bei der Typprüfung des Motors bestimmt werden)

Im Betrieb des Motors wird anhand der gemessenen Werte für die Umgebungstemperatur des Motors der Abschaltwert des Wicklungsstromes I_{Abschalt-}berechnet, bei dem der Motor bei Überschreiten desselben über ein Abschaltsignal abgeschaltet wird.

Der mathematische Algorithmus zur Bestimmung des maximal zulässigen Wicklungsstromes in Abhängigkeit der Umgebungstemperatur lautet erfindungsgemäß wie folgt: ${I}_{Abschalt} = {I}_{Grenz} ∗ {K}_{TU}$ wobei
- I_{Abschalt}:: Mittelwert des Wicklungsstromes, bei dem der Motor abgeschaltet wird
- I_{Grenz} :: maximaler zulässiger Mittelwert des Wicklungsstromes I_{Wicklung}.
- K_{TU}:: Korrekturfaktor

Erfindungsgemäß wird hierzu eine Temperaturüberwachungseinrichtung zum drehzahlunabhängigen Schutz der Wicklung eines elektronisch kommutierten Elektromotors vor Erwärmung über eine bestimmte Grenztemperatur T_{G} vorgesehen, wobei diese ausgebildet ist mit einer Phasenstromerfassungseinrichtung zum Erfassen des Phasenstroms Iw für die Motorwicklungen, einer Überstromabschalteinrichtung zum Abschalten des Elektromotors beim Überschreiten eines maximal zulässigen Phasenstroms I_{Abschalt}, einer Überstromüberwachungseinrichtung, die mit der Überstromabschalteinrichtung verbunden ist, um dieser ein Abschaltsignal zu übermitteln, wenn der erfasste Phasenstrom Iw den von einer Erfassungs- und Berechnungseinrichtung ermittelten maximal zulässigen Phasenstrom I_{Abschalt} überschreitet, wobei bei der Ermittlung des maximal zulässigen Phasenstroms I_{Abschalt} ein Algorithmus verwendet wird, bei der die gemessene Umgebungstemperatur Tu umfasst ist.

In einer bevorzugten Ausgestaltung der Erfindung ist weiter eine Elektronik vorgesehen ist, um mittels Clark-Park-Transformation aus dem mit der Wicklungsstromerfassungseinrichtung erfassten Wicklungsstrom den d- und q-Wicklungsstromanteil im Zeigermodell zu erhalten und beim Algorithmus zur Ermittlung des maximal zulässigen Phasenstroms I_{Abschalt} ferner der d-Wicklungsstromanteil und der q-Wicklungsstromanteil berücksichtigt werden, wobei dieser bevorzugt nach der bereits zuvor angegebenen Formel: ${I}_{W} = \sqrt{{Id}^{2} + {Iq}^{2}}$ ermittelt wird.

Es ist weiter vorteilhaft, wenn eine Vorrichtung zur Erfassung der Umgebungstemperatur Tu vorgesehen ist oder diese aus Motordaten gewonnen wird.

In einer weiteren bevorzugten Ausführungsform ist vorgesehen, dass wenigstens eine auslesbare Speichervorrichtung für die Bereitstellung von Sollwertdaten mit der Erfassungs- und Berechnungseinrichtung für die Ermittlung des maximal zulässigen Phasenstroms I_{Abschalt} verbunden ist, wobei als Sollwertdaten wenigstens die maximal zulässige Umgebungstemperatur Tz, die maximal zulässige Übertemperatur des Motors Tₘₐₓ und der maximal zulässige Wicklungsstrom I_{Grenz.}vorgesehen sind.

Ebenfalls ist es vorteilhaft, wenn die Sollwertdaten über eine vorhandene Eingabevorrichtung an den Speicher eingegeben werden können, der vorzugsweise als nicht flüchtiger Speicher ausgebildet ist.

Ein weiterer Aspekt der vorliegenden Erfindung betrifft ein Verfahren zur drehzahlunabhängigen Temperaturüberwachung eines wenigstens eine Wicklung aufweisenden Elektromotors mit einer Temperaturüberwachungseinrichtung den folgenden Schritten:
a. Messen des Phasenstroms mit der Phasenstromerfassungseinrichtung während eines vorbestimmten Zeitraums t;
b. Durchführen einer Clark-Park-Transformation des gemessenen Phasenstromes zum Erhalt der d- und q- Wicklungsstromanteile im dq-Zeigersystem;
c. Berechnen der geometrischen Summe der d- und q- Wicklungsströme gemäß der folgenden Formel: ${I}_{W} = \sqrt{{Id}^{2} + {Iq}^{2}}$
d. Erfassen der Umgebungstemperatur und
e. Berechnen des Abschaltstromes gemäß dem zuvor angegebenen Algorithmus: I_{Abschalt} = I_{Grenz *} K_{TU} , wobei K_{TU} ein Korrekturfaktor darstellt, der sich wie folgt bestimmt: ${K}_{TU} = 1 für {T}_{U} < {T}_{Z}$ ${K}_{TU} = 1 - \left(\frac{Tu - Tmax}{Tmax}\right) für {T}_{U} > {T}_{Z}$

Die Bezeichnungen Tu, Tz, Tₘₐₓ wurden bereits zuvor erläutert. Verfahren gemäß Anspruch 7, dadurch gekennzeichnet, dass die Berechnung in Schritt e) mittels der Erfassungs- und Berechnungseinrichtung (14) erfolgt.

In einer weiteren vorteilhaften Ausbildung des Verfahrens ist vorgesehen, dass ein Komparator den erfassten Phasenstroms Iw mit dem maximal zulässigen Phasenstrom I_{Abschalt} vergleicht und bei der Bedingung Iw > I_{Abschalt} die Überstromabschalteinrichtung den Elektromotor abschaltet oder die Kommutierung unterbricht.

Dabei ist es weiter von Vorteil, wenn nach einem Abschaltvorgang oder Unterbrechungsvorgang nach Ablauf einer definierten Totzeit ein automatischer Motorstart bzw. Wiederstart erfolgt. Auf diese Weise kann sichergestellt werden, dass auch Motoren wieder nach einer Überhitzung anlaufen ohne dass es eines manuellen Eingriffs durch eine Bedienperson bedarf.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine Tabelle, die den Zusammenhang zwischen den Isolierstoffklassen bzw. den zugehörigen Temperaturwerten und der jeweils zulässigen Temperaturerhöhung darstellt,
- Fig. 2: einen Funktionsgraphen des Korrekturfaktors in Abhängigkeit der Umgebungstemperatur;
- Fig. 3: ein Blockschaltbild einer beispielhaften Ausführungsform einer Temperaturüberwachungseinrichtung eines Elektromotors und
- Fig. 4: ein beispielhaftes Ablaufdiagramm des erfindungsgemäßen Verfahrens.

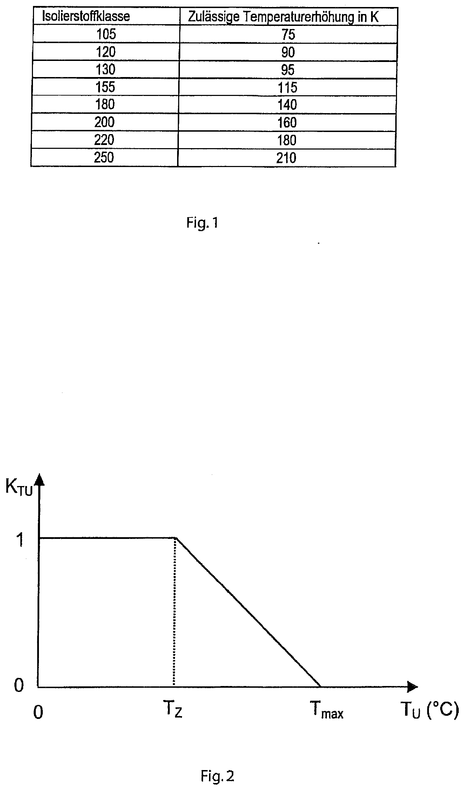

Im Folgenden wird die Erfindung anhand eines Ausführungsbeispiels mit Bezug auf die Figuren 1 bis 4 näher erläutert, wobei gleiche Bezugszeichen auf gleiche funktionale und/oder strukturelle Merkmale hinweisen.

Die Fig. 1 zeigte eine Tabelle, die den Zusammenhang zwischen den Isolierstoffklassen bzw. den zugehörigen Temperaturwerten 105° (Klasse A) bis 250° und der jeweils zulässigen Temperaturerhöhung in Kelvin darstellt. Die Temperaturerhöhung wird dabei als Differenz zwischen der Wicklungstemperatur und der Umgebungstemperatur bestimmt.

Die Fig. 2 zeigt einen Funktionsgraphen des Korrekturfaktors K_{TU} in Abhängigkeit der Umgebungstemperatur Tu mit den Bezeichnungen Tu, Tz, Tₘₐₓ , die bereits im Rahmen der allgemeiner Erfindungsbeschreibung erläutert wurden. ${K}_{TU} = 1 für {T}_{U} < {T}_{Z}$ ${K}_{TU} = 1 - \left(\frac{Tu - Tmax}{Tmax}\right) für {T}_{U} > {T}_{Z}$

Der Korrekturfaktors K_{TU} verringert sich mit zunehmender Umgebungstemperatur Tu ab der maximale Umgebungstemperatur, die für den Motor spezifiziert ist linear bis die maximal zulässige Übertemperatur erreicht ist. In diesem Bereich kann der Motor mit verringerter Leistung betrieben werden.

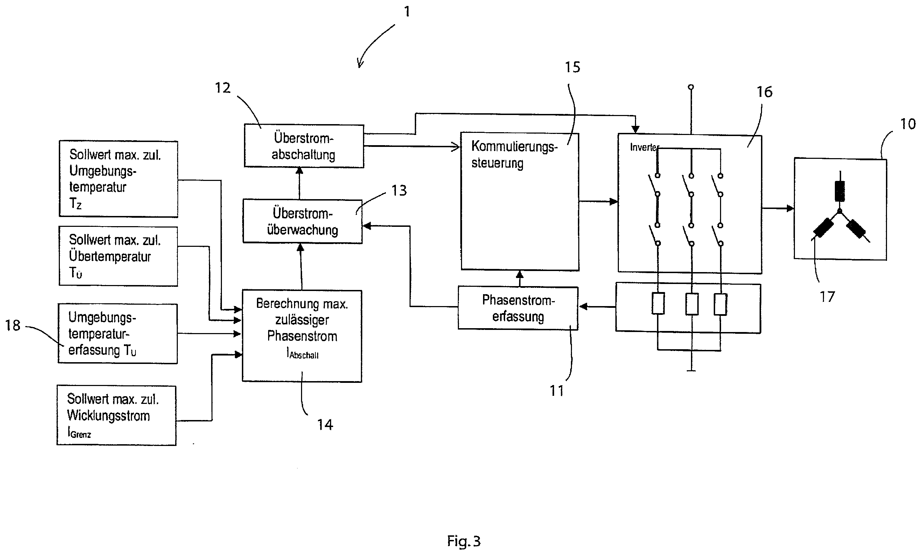

In der Figur 3 ist ein Blockschaltbild einer beispielhaften Ausführungsform einer Temperaturüberwachungseinrichtung 1 eines Elektromotors gezeigt. Die Temperaturüberwachungseinrichtung 1 ist zum drehzahlunabhängigen Schutz der Wicklung eines elektronisch kommutierten Elektromotors 10 vor Erwärmung über eine bestimmte Grenztemperatur T_{G} mit einer Phasenstromerfassungseinrichtung 11 zum Erfassen des Phasenstroms Iw für die Motorwicklungen ausgebildet. Ferner ist eine Überstromabschalteinrichtung 12 zum Abschalten des Elektromotors 10 beim Überschreiten eines maximal zulässigen Phasenstroms I_{Abschalt} vorgesehen.

Die Überstromabschalteinrichtung 12 ist mit einer Überstromüberwachungseinrichtung 11 verbunden, um von dieser bei Eintritt der Abschaltbedingung ein Abschaltsignal zu erhalten und zwar, wenn der erfasste Phasenstrom Iw den maximal zulässigen Phasenstrom I_{Abschalt} überschreitet.

Zur Ermittlung oder Berechnung des maximal zulässigen Phasenstroms I_{Abschalt} ist eine Erfassungs- und Berechnungseinrichtung 14 vorgesehen, die mit der Überstromüberwachungseinrichtung 11 verbunden ist.

Weiter ist erkennbar, dass die Erfassungs- und Berechnungseinrichtung 14 mit Einrichtungen verbunden ist zum Erhalt von Sollwerten Tz, Tₘₐₓ, I_{Grenz} sowie der Umgebungstemperatur Tu. Die Umgebungstemperatur wird mit einer Vorrichtung 18 zur Erfassung der Umgebungstemperatur ermittelt bzw. gemessen.

Die Phasenstromerfassungseinrichtung 11 ist mit der Kommutierungssteuerung 15 und diese wiederum mit dem Inverter 16 zum Bestromen der Motorwicklungen 17 des Elektromotors E verbunden.

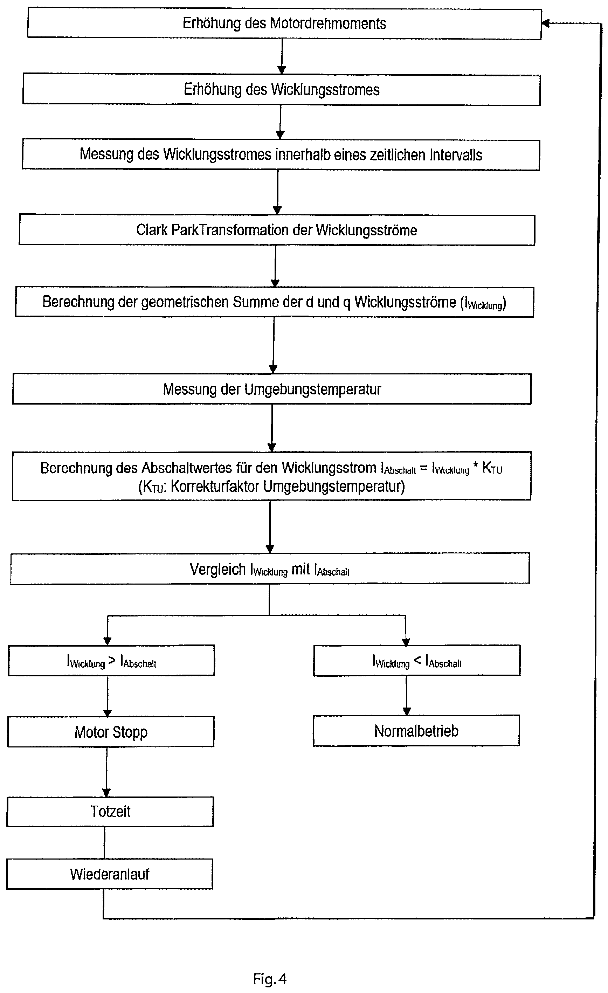

In der Figur 4 ist ein beispielhaftes Ablaufdiagramm gezeigt, um das erfindungsgemäße Verfahren zu erläutern. Zur Erhöhung des Motordrehmomentes erfolgt eine Erhöhung des Wicklungsstromes, der gemessen wird. Im Folgenden werden die bereits zuvor beschriebenen Schritte durchgeführt bis ein Komparator den erfassten Phasenstroms Iw mit dem maximal zulässigen Phasenstrom I_{Abschalt} vergleicht und bei der Bedingung Iw > I_{Abschalt} die Überstromabschalteinrichtung 12 den Elektromotor E abschaltet oder die Kommutierung der der Kommutierungssteuerung 15 unterbricht. Andernfalls wird der Normalbetrieb detektiert.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht, so kann wie im Ausführungsbeispiel der Figur 4 gezeigt nach einem Abschaltvorgang des Elektromotors E nach Ablauf einer definierten Totzeit ein automatischer Motorneustart erfolgen.

## Patentansprüche

1. Temperaturüberwachungseinrichtung (1) zum drehzahlunabhängigen Schutz der Wicklung eines elektronisch kommutierten Elektromotors (10) vor Erwärmung über eine bestimmte Grenztemperatur T_{G} mit einer Phasenstromerfassungseinrichtung (11) zum Erfassen des Phasenstroms Iw für die Motorwicklungen, einer Überstromabschalteinrichtung (12) zum Abschalten des Elektromotors (10) beim Überschreiten eines maximal zulässigen Phasenstroms I_{Abschalt}, einer Überstromüberwachungseinrichtung (13), die mit der Überstromabschalteinrichtung (12) verbunden ist, um dieser ein Abschaltsignal zu übermitteln, wenn der erfasste Phasenstrom Iw den von einer Erfassungs- und Berechnungseinrichtung (14) ermittelten maximal zulässigen Phasenstrom I_{Abschalt} überschreitet, wobei bei der Ermittlung des maximal zulässigen Phasenstroms I_{Abschalt} ein Algorithmus verwendet wird, bei der die gemessene Umgebungstemperatur Tu umfasst ist, wobei eine Elektronik vorgesehen ist, um mittels Clark-Park-Transformation aus dem mit der Wicklungsstromerfassungseinrichtung (11) erfassten Wicklungsstrom den d- und q-Wicklungsstromanteil im Zeigermodell zu erhalten und beim Algorithmus zur Ermittlung des maximal zulässigen Phasenstroms I_{Abschalt} ferner der d-Wicklungsstromanteil und der q-Wicklungsstromanteil berücksichtigt werden und die Ermittlung des Phasenstroms I_{W} im Zeigermodel nach der folgenden Formel erfolgt: ${I}_{W} = \sqrt{{Id}^{2} + {Iq}^{2}} .$

2. Temperaturüberwachungseinrichtung (1) gemäß Anspruch 1, **dadurch gekennzeichnet, dass** eine Vorrichtung (18) zur Erfassung der Umgebungstemperatur Tu vorgesehen ist.

3. Temperaturüberwachungseinrichtung (1) gemäß einem der vorhergehenden Ansprüche, **dadurch gekennzeichnet, dass** wenigstens eine auslesbare Speichervorrichtung für die Bereitstellung von Sollwertdaten mit der Erfassungs- und Berechnungseinrichtung (14) für die Ermittlung des maximal zulässigen Phasenstroms I_{Abschalt} verbunden ist, wobei als Sollwertdaten wenigstens die maximal zulässige Umgebungstemperatur Tz, die maximal zulässige Übertemperatur des Motors Tₘₐₓ und der maximal zulässige Wicklungsstrom I_{Grenz.}vorgesehen sind.

4. Temperaturüberwachungseinrichtung (1) gemäß Anspruch 1, **dadurch gekennzeichnet, dass** die Sollwertdaten über eine Eingabevorrichtung an den Speicher eingegeben werden können.

5. Verfahren zur drehzahlunabhängigen Temperaturüberwachung eines wenigstens eine Wicklung aufweisenden Elektromotors mit einer Temperaturüberwachungseinrichtung gemäß einem der Ansprüche 1 bis 4 mit den folgenden Schritten:
a. Messen des Phasenstroms mit der Phasenstromerfassungseinrichtung (11) während eines vorbestimmten Zeitraums t;
b. Durchführen einer Clark-Park-Transformation des gemessenen Phasenstromes zum Erhalt der d- und q- Wicklungsstromanteile im dq-Zeigersystem;
c. Berechnen der geometrischen Summe der d- und q- Wicklungsströme gemäß der folgenden Formel: ${I}_{W} = \sqrt{{Id}^{2} + {Iq}^{2}}$
d. Erfassen der Umgebungstemperatur und
e. Berechnen des Abschaltstromes gemäß dem folgenden Algorithmus: ${I}_{Abschalt} = {I}_{Grenz} ∗ {K}_{TU}$ wobei
I_{Abschalt}: Abschaltstrom d. h. Mittelwert des Wicklungsstromes, bei dem der Motor abgeschaltet wird,
I_{Grenz} : maximaler zulässiger Mittelwert des Wicklungsstromes I_{Wicklung}.
K_{TU}: Korrekturfaktor und sich der Korrekturfaktor wie folgt bestimmt:
${K}_{TU} = 1 für {T}_{U} < {T}_{Z}$ ${K}_{TU} = 1 - \left(\frac{Tu - Tmax}{Tmax}\right) für {T}_{U} > {T}_{Z}$ wobei
T_{U}: Umgebungstemperatur,
T_{Z}: die maximale Umgebungstemperatur, die für den Motor spezifiziert ist,
Tₘₐₓ: die für den Motor maximal zulässige Übertemperatur.

6. Verfahren gemäß Anspruch 5, **dadurch gekennzeichnet, dass** die Berechnung in Schritt e) mittels der Erfassungs- und Berechnungseinrichtung (14) erfolgt.

7. Verfahren gemäß Anspruch 5 oder 6, **dadurch gekennzeichnet, dass** ein Komparator den erfassten Phasenstroms Iw mit dem maximal zulässigen Phasenstrom I_{Abschalt} vergleicht und bei der Bedingung Iw > I_{Abschalt} die Überstromabschalteinrichtung (12) den Elektromotor abschaltet oder die Kommutierung unterbricht.

8. Verfahren gemäß Anspruch 7, **dadurch gekennzeichnet, dass** nach einem Abschaltvorgang oder Unterbrechungsvorgang nach Ablauf einer definierten Totzeit ein automatischer Motorstart erfolgt.

## Claims

1. A temperature monitoring device (1) for protecting the winding of an electronically commutated electric motor (10) from being heated over a specified limit temperature T_{G} regardless of the rotational speed, comprising a phase current detection device (11) for detecting the phase current I_{W} for the motor windings, an overcurrent switch-off device (12) for switching off the electric motor (10) if a maximum permissible phase current I_{Abschalt} is exceeded, and an overcurrent monitoring device (13), which is connected to the overcurrent switch-off device (12), in order to transmit to it a switch-off signal if the detected phase current I_{W} exceeds the maximum permissible phase current I_{Abschalt} ascertained by a detection and computing device (14), wherein an algorithm in which the measured ambient temperature T_{U} is incorporated is used when ascertaining the maximum permissible phase current I_{Abschalt}, wherein an electronics is provided in order to obtain by means of Clark-Park transformation from the winding current detected with the winding current detection device (11) the d-winding current component and the q-winding current component in the pointer model and moreover the d-winding current component and the q-winding current component are factored into the algorithm for ascertaining the maximum permissible phase current I_{Abschalt} and the ascertaining of the phase current I_{W} in the pointer model is done by the following formula: ${I}_{W} = \sqrt{{Id}^{2} + {Iq}^{2}} .$

2. The temperature monitoring device (1) according to claim 1, **characterized in that** a device (18) is provided for detecting the ambient temperature Tu.

3. The temperature monitoring device (1) according to any one of the preceding claims, **characterized in that** at least one readable storage device for the providing of target value data is connected to the detection and computing device (14) for the ascertaining of the maximum permissible phase current I_{Abschalt}, wherein at least the maximum permissible ambient temperature T_{Z}, the maximum permissible excess temperature of the motor Tₘₐₓ and the maximum permissible winding current I_{Grenz} are provided as the target value data.

4. The temperature monitoring device (1) according to claim 1, **characterized in that** the target value data can be entered into the storage device via a data entry device.

5. A method for temperature monitoring of an electric motor having at least one winding regardless of the rotational speed with a temperature monitoring device according to any one of claims 1 to 4 with the following steps:
a. measuring the phase current with the phase current detection device (11) during a predetermined time interval t;
b. performing a Clark-Park transformation of the measured phase current to obtain the d-winding current component and the q-winding current component in the dq-pointer system;
c. calculating the geometrical sum of the d-winding current and the q-winding current by the following formula: ${I}_{W} = \sqrt{{Id}^{2} + {Iq}^{2}}$
d. detecting the ambient temperature, and
e. calculating the switch-off current by the following algorithm: ${I}_{Abschalt} = {I}_{Grenz} ∗ {K}_{TU}$ where
I_{Abschalt}: is the switch-off current, i.e., the mean value of the winding current at which the motor is switched off,
I_{Grenz} : is the maximum permissible mean value of the winding current I_{W}.
K_{TU}: is a correction factor, being determined as follows:
${K}_{TU} = 1 for {T}_{U} < {T}_{Z}$ ${K}_{TU} = 1 - \left(\frac{Tu - Tmax}{Tmax}\right) for {T}_{U} > {T}_{Z}$ where
T_{U}: is the ambient temperature,
T_{Z}: is the maximum ambient temperature specified for the motor,
Tₘₐₓ: is the maximum permissible excess temperature for the motor.

6. The method according to claim 5, **characterized in that** the calculation in step e) is done by means of the detection and computing device (14).

7. The method according to claim 5 or 6, **characterized in that** a comparator compares the detected phase current I_{W} with the maximum permissible phase current I_{Abschalt} and the overcurrent switch-off device (12) switches off the electric motor or interrupts the commutation when I_{W} > I_{Abschalt}.

8. The method according to claim 7, **characterized in that** an automatic motor starting occurs upon expiration of a defined dead time after a switch-off process or an interruption process.

## Revendications

1. Dispositif de surveillance de température (1) pour la protection, indépendante de la vitesse de rotation, de l'enroulement d'un moteur électrique (10) à commutation électronique contre un échauffement au-delà d'une température limite déterminée T_{G}, comprenant un dispositif de détection de courant de phase (11) destiné à détecter le courant de phase Iw pour les enroulements de moteur, un dispositif de coupure de surintensité (12) destiné à couper le moteur électrique (10) en cas de dépassement d'un courant de phase maximal admissible I_{Abschalt}, un dispositif de surveillance de surintensité (13) qui est connecté au dispositif de coupure de surintensité (12) pour transmettre à celui-ci un signal de coupure lorsque le courant de phase détecté Iw dépasse le courant de phase maximal admissible I_{Abschalt} déterminé par un dispositif de détection et de calcul (14), dans lequel, lors de la détermination du courant de phase maximal admissible I_{Abschalt}, un algorithme est utilisé, dans lequel la température ambiante mesurée T_{U} est incluse, dans lequel une électronique est prévue pour obtenir, au moyen d'une transformée de Clarke-Park, à partir du courant d'enroulement détecté par le dispositif de détection de courant d'enroulement (11), les composantes de courant d'enroulement d et q dans le modèle vectoriel, et, dans l'algorithme de détermination du courant de phase maximal admissible I_{Abschalt}, la composante de courant d'enroulement d et la composante de courant d'enroulement q sont en outre prises en compte, et la détermination du courant de phase I_{W} dans le modèle vectoriel s'effectue selon la formule suivante : ${I}_{w} = \sqrt{{Id}^{2} + {Iq}^{2}} .$

2. Dispositif de surveillance de température (1) selon la revendication 1, **caractérisé en ce qu'**un dispositif (18) de détection de la température ambiante Tu est prévu.

3. Dispositif de surveillance de température (1) selon l'une quelconque des revendications précédentes, **caractérisé en ce qu'**au moins un dispositif de mémoire lisible pour la fourniture de données de valeur de consigne est connecté au dispositif de détection et de calcul (14) pour la détermination du courant de phase maximal admissible I_{Abschalt}, dans lequel au moins la température ambiante maximale admissible T_{Z}, l'échauffement maximal admissible du moteur Tₘₐₓ et le courant d'enroulement maximal admissible I_{Grenz} sont prévus en tant que données de valeur de consigne.

4. Dispositif de surveillance de température (1) selon la revendication 1, **caractérisé en ce que** les données de valeur de consigne peuvent être saisies dans la mémoire par l'intermédiaire d'un dispositif d'entrée.

5. Procédé de surveillance de température, indépendante de la vitesse de rotation, d'un moteur électrique présentant au moins un enroulement, avec un dispositif de surveillance de température selon l'une quelconque des revendications 1 à 4, le procédé comprenant les étapes consistant à :
a. mesurer le courant de phase avec le dispositif de détection de courant de phase (11) pendant un intervalle de temps prédéterminé t ;
b. effectuer une transformée de Clarke-Park du courant de phase mesuré pour obtenir les composantes de courant d'enroulement d et q dans le système vectoriel dq ;
c. calculer la somme géométrique des courants d'enroulement d et q selon la formule suivante : ${I}_{w} = \sqrt{{Id}^{2} + {Iq}^{2}}$
d. détecter la température ambiante ; et
e. calculer le courant de coupure selon l'algorithme suivant : ${I}_{Abschalt} = {I}_{Grenz} ∗ {K}_{TU}$ dans lequel
I_{Abschalt}: courant de coupure, c'est-à-dire valeur moyenne du courant d'enroulement à laquelle le moteur est coupé,
I_{Grenz:} valeur moyenne maximale admissible du courant d'enroulement I_{Wicklung}.
K_{TU}: facteur de correction, et le facteur de correction se détermine comme suit : ${K}_{TU} = 1 pour {T}_{U} < {T}_{Z}$ ${K}_{TU} = 1 - \left(\frac{{T}_{u - {T}_{max}}}{{T}_{max}}\right) pour {T}_{U} > {T}_{Z}$
dans lequel
T_{U}: température ambiante,
T_{Z:} la température ambiante maximale qui est spécifiée pour le moteur,
Tₘₐₓ : l'échauffement maximal admissible pour le moteur.

6. Procédé selon la revendication 5, **caractérisé en ce que** le calcul à l'étape e) s'effectue au moyen du dispositif de détection et de calcul (14).

7. Procédé selon la revendication 5 ou 6, **caractérisé en ce qu'**un comparateur compare le courant de phase détecté I_{W} avec le courant de phase maximal admissible I_{Abschalt} et, si la condition I_{W} > I_{Abschalt} est remplie, le dispositif de coupure de surintensité (12) coupe le moteur électrique ou interrompt la commutation.

8. Procédé selon la revendication 7, **caractérisé en ce que**, après un processus de coupure ou un processus d'interruption, un démarrage automatique du moteur s'effectue après l'écoulement d'un temps mort défini.
